# EUROPEAN PATENT SPECIFICATION

(11) **EP 0 773 847 B1**
(45) Date of publication and mention of the grant of the patent: **20.10.1999**
(21) Application number: 95926374.0
(22) Date of filing: 13.07.1995
(51) Int. Cl.: B23B 29/00

(54) **TOOL-BIT HOLDER**
SCHNEIDEINSATZHALTER
PORTE-OUTILS

(30) Priority: 22.07.1994 DK 87094
(43) Date of publication of application: 21.05.1997
(73) Proprietor: Hansen, Niels Joergen, 5250 Odense SV (DK)
(72) Inventor: Hansen, Niels Joergen, 5250 Odense SV (DK)
(74) Representative: Roerboel, Leif
(86) International application number: PCT/DK95/00303
(87) International publication number: WO 96/03242

(56) References cited:
- EP-A- 0 313 044
- DE-A- 3 600 077
- DE-A- 4 324 869
- US-A- 4 553 884
- US-A- 4 903 785
- US-A- 5 237 895

## Description

### TECHNICAL FIELD

The present invention relates to an elongated tool-bit holder of the kind set forth in the preamble of claim 1.

### BACKGROUND ART

DE-A-3600077 discloses in its Figures 49-52 and the associated text a tool-bit holder exhibiting the features set forth in the preamble of claim 1 as mentioned above. In this document, the holder is described as part of an end-milling cutter, but said tool can obviously be used as a drilling tool, such as is the case with many end-milling cutters having a small number of tool bits. Up to the present, it has been considered important that a tool-bit holder, in order to function well in a drilling operation, be symmetrical about its longitudinal axis to avoid instability when operating at high machining speeds, i.e. a high amount of material being removed per unit time, and this condition of symmetry is in fact fulfilled by the tool shown and described in said document.

### DISCLOSURE OF THE INVENTION

On this background, it is the object of the invention to provide a tool-bit holder of the kind referred to above, with which it is possible by extremely simple means to achieve high machining speeds without any risk of instability, and this object is achieved by means of the features set forth in the characterizing clause of claim 1. With a holder exhibiting these features it has proved possible to achieve higher machining speeds than with holders, in which the tool bits are placed and oriented in the conventional symmetrical manner, and the instability, that would be expected, does not occur.

Advantageous embodiments of the tool-bit holder are set forth in claims 2 and 3.

### BRIEF DESCRIPTION OF THE DRAWINGS

In the following, the invention is explained in more detail with reference to the exemplary embodiment of a tool-bit holder according to the invention shown in the drawing, in which
- Figure 1: is a front view in the direction of the arrow I in Figure 2 of a drill in the form of a drill-bit holder with clamped-on tool bits, together with the hole being drilled in a workpiece, and
- Figure 2: is a side view in the direction of the arrow II in Figure 1 of the drill shown in Figure 1.

### DESCRIPTION OF THE PREFERRED EMBODIMENT

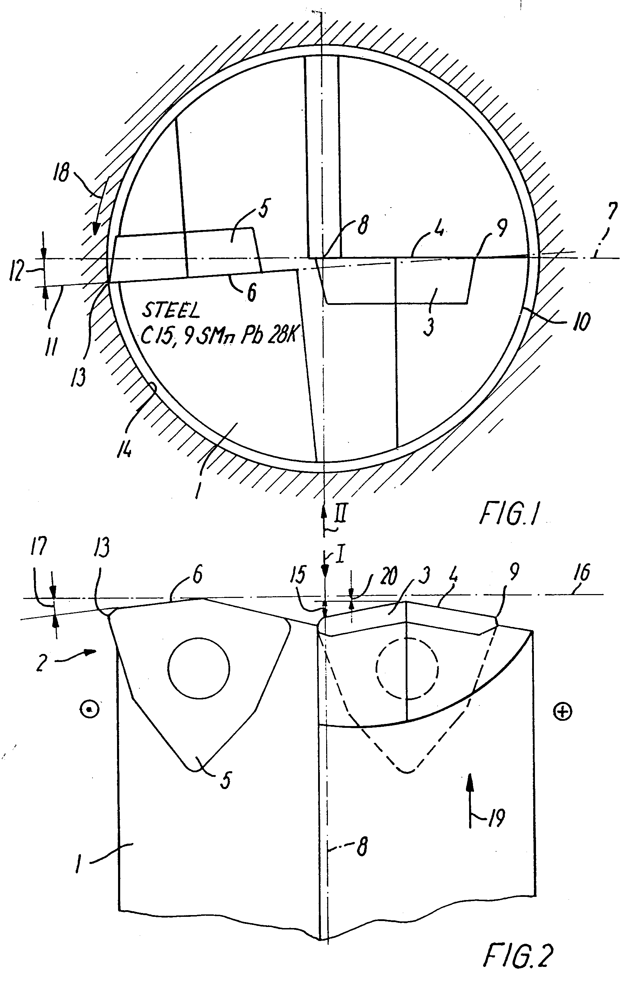

Figures 1 and 2 show the front end of a drill consisting of an elongated drill-bit holder 1, of which only the front end 2 is shown, and which in a roughly well-known manner supports two tool bits, viz. a first bit 3 with its associated first cutting edge 4 and a second bit 5 with its associated second cutting edge 6.

The tool bits 3 and 5 are in a manner known per se generally shaped like equilateral triangles, in which the corners are rounded and the sides are broken outwardly on the middle so as to give the cutting edges 4 and 6 a flattened V-shape. The bits 3 and 5 are secured to the drill-bit holder 1 in a manner known per se (not shown) so that they can be removed and turned and/or replaced.

As will be seen from Figure 1, the first cutting edge 4 lies in a meridian plane 7 and extends from a position close to the drilling axis 8 to an outermost corner 9 at an appreciable distance from the periphery 10 of the drill support.

The second cutting edge 6 lies in an axial plane 11 intersecting the meridian plane 7 at the outermost corner 9 at an angle 12 of between 1° and 4°, the second cutting edge 6 extending from a position at an appreciable distance from the drilling axis 8 to an outermost corner 13 defining the periphery 14 of the hole being or having been drilled.

As will appear from Figure 2, the two bits 3 and 5 are mutually axially offset in such a manner that the first bit 3, as reckoned in the feed direction 19 of the drill, is lagging by a small distance 20, i.e. that the load on the second bit 5 becomes greater. In addition, the bits are oriented about their central axes in such a manner that the innermost half of the first cutting edge 4 forms an angle 15 of between 8° and 10° with a radial plane 16, whereas the outermost half of the second cutting edge 6 forms an angle 17 of between 5° and 7° with this radial plane.

The positioning of the second bit 5, partly in the feeding direction 19 in front of the first bit 3, partly in the direction of rotation 18 in front of a symmetrical position relative to the first bit 3, causes the greatest cutting force to be on the second bit 5. This asymmetrical arrangement would normally be expected to make the drill consisting of the drill-bit holder 1 and the two tool bits 3 and 5 unstable, i.e. it would most probably execute torsional vibrations during a drilling operation, in a manner known per se causing the formation of machining marks in the periphery 14 of the hole being drilled and - not least - an intolerable noise and risk of damage to the tool bit, but practical tests have shown this not to be the case. One possible explanation is that the asymmetrical loading causes a unilateral deformation of the holder 1 into a slightly eccentric position of its free end, in which position the unilateral "biasing" prevents oscillations. The tests referred to above have been carried out using steel corresponding to C 15, 9 SMnPb 28K, but other types of steel with similar vibration-damping properties may, of course, also be used.

To prevent wear on the drill-bit holder 1 due to the contact with the chips produced, the drill-bit holder may be treated to make its surface sufficiently hard to avoid such wear arising. If the drill-bit holder 1 consists of mild steel as mentioned above, this may easily be achieved by conventional case hardening, e.g. at a depth of approx. 0.5 mm and to a Rockwell-hardness of between 55 and 60. A further effect of this is that the chips slide more easily on the surfaces concerned, this being important especially in the case of deep holes, in which a "burning-on" may easily take place.

### LIST OF PARTS

- 1: Drill-bit holder
- 2: Front end
- 3: First tool bit
- 4: First cutting edge
- 5: Second tool bit
- 6: Second cutting edge
- 7: Meridian plane
- 8: Drilling axis
- 9: Outermost corner
- 10: Periphery
- 11: Axial plane
- 12: Angle
- 13: Outermost corner
- 14: Periphery
- 15: Angle
- 16: Radial plane
- 17: Angle
- 18: Direction of rotation
- 19: Feed direction
- 20: Distance

## Claims

1. Elongated tool-bit holder (1), at one end being adapted to be secured in a stationary or rotating part of a machine tool, e.g. a lathe and a drilling machine, respectively, and at its other end being adapted to hold securely at least two tool bits (3,5) of cemented carbide or other hard material clamped at the front end (2), said tool bits (3,5) being mounted with their cutting edges (4,6) facing generally forward in the direction (19), in which the tool consisting of the tool-bit holder (1) and the bits (3,5) during a drilling operation moves through the hole (14) being drilled, said bits (3,5) also being positioned with the cutting edges (4,6) extending in such a manner that the cutting edge (4) of the first tool bit (3) extends in a diametral plane (7) from a position close to the drilling axis (8) to a position (9) at a distance from the periphery (14) of the hole being drilled, whereas cutting edges (6) of the second tool bit (5) extend from a position at a distance from the drilling axis (8) to said periphery (10), **characterized** in
a) that the cutting edges (4,6) are of flat V-shape with the point of the V facing forward in said direction (19), and
b) that the cutting edge (6) of the second bit (5) is situated in front of the cutting edge (4) of the first bit (3), when considered in said direction (19), and also in front of a symmetrical position relative to the cutting edge (4) of the first bit (3), when considered in the working direction of rotation (18) of the drill.

2. Tool-bit holder according to claim 1, **characterized** in that the cutting edge (6) of the second bit (5) extends in an axial plane (11) tangent to the radially outermost point (9) of the cutting edge (4) of the first bit (3) and forms an angle (12) of 1-4° with a meridian plane (7) extending through said outermost point (9).

3. Tool-bit holder according to claim 1 or 2, **characterized** in that said holder (1) in all essentials is a homogeneous body consisting of steel corresponding to C15, 9 SMnPb 28K.

## Patentansprüche

1. Länglicher Werkzeugeinsatzhalter (1), der an einem Ende in ein stationäres oder rotierendes Teil einer Werkzeugmaschine, d.h. einer Drehbank bzw. einer Bohreinrichtung, einspannbar ist, und dessen anderes Ende ausgebildet ist, um wenigstens zwei Werkzeug-Einsätze (3, 5) aus Hartmetall oder einem anderen harten Material an dem vorderen Ende (2) festgeklemmt zu halten, wobei die Werkzeugeinsätze (3, 5) mit ihren Schneidkanten (4, 6) im wesentlichen nach vorn in derjenigen Richtung (19) gerichtet angebracht sind, in der sich das aus dem Werkzeugeinsatzhalter und den Einsätzen (3, 5) bestehende Werkzeug während eines Bohrvorganges durch das zu bohrende Loch (14) bewegt, wobei die Einsätze (3, 5) mit den Schneidkanten (4, 6) auch so positioniert sind, dass sich die Schneidkante (4) des ersten Werkzeugeinsatzes (3) in einer Diametralebene (7) von einer nahe der Drehachse (8) liegenden Stelle zu einer beabstandet vom Umfang (14) des zu bohrenden Lochs liegenden Stelle erstreckt, wohingegen sich Schneidkanten (6) des zweiten Werkzeugeinsatzes (5) von einer beabstandet von der Drehachse (8) liegenden Stelle bis zum Umfang (10) erstrecken, **dadurch gekennzeichnet**,
(a) dass die Schneidkanten (4, 6) eine flache V-Form haben, wobei die Spitze des V's in die besagte Richtung (19) zeigt,
(b) dass, in der besagten Richtung (19) betrachtet, die Schneidkante (6) des zweiten Einsatzes (5) vor der Schneidkante (4) des ersten Einsatzes (3) und, in der Dreharbeitsrichtung (18) der Bohreinrichtung betrachtet, auch vor einer relativ zur Schneidkante (4) des ersten Einsatzes (3) symmetrischen Stellung liegt.

2. Werkzeugeinsatzhalter nach Anspruch 1, **dadurch gekennzeichnet**, dass die Schneidkante (6) des zweiten Einsatzs (5) in einer zur radial äußersten Spitze (9) der Schneidkante (4) des ersten Einsatzs (3) tangentialen Axialebene (11) verläuft und mit einer durch den äußersten Punkt gehenden Meridianebene (7) einen Winkel (12) von 1-4° bildet.

3. Werkzeugeinsatzhalter nach Anspruch 1 oder 2, **dadurch gekennzeichnet**, dass der Halter (1) in allen wesentlichen Teilen ein homogener Körper ist, der aus einem C15,9 SMnPb 28K entsprechenden Stahl besteht.

## Revendications

1. Porte-outils allongé (1), apte à une extrémité à être fixé dans une pièce fixe ou rotative d'une machine-outil, par exemple respectivement un tour et une perceuse, et apte à son autre extrémité à maintenir fermement au moins deux embouts d'outils (3, 5) en carbure cémenté ou en autre matériau dur pincé au niveau de l'extrémité avant (2), lesdits embouts d'outils (3, 5) étant montés avec leurs bords de coupe (4, 6) tournés généralement vers l'avant dans la direction (19), dans laquelle l'outil se composant du porte-outils (1) et des embouts d'outils (3, 5) lors d'une opération de perçage se déplace dans le trou (14) en train d'être percé, lesdits embouts d'outils (3, 5) étant également placés avec les bords de coupe (4, 6) s'étendant de telle manière que le bord de coupe (4) du premier embout d'outil (3) s'étende dans un plan diamétral (7) allant d'une position proche de l'axe de perçage (8) à une position (9) éloignée de la périphérie (14) du trou en train d'être percé, tandis que les bords de coupe (6) du second embout d'outil (5) s'étendent d'une position éloignée de l'axe de perçage (8) vers ladite périphérie (10), caractérisé en ce que
a) les bords de coupe (4, 6) ont une forme de V plat, la pointe du V étant tournée vers l'avant dans ladite direction (19), et
b) le bord de coupe (6) du second embout (5) est placé à l'avant du bord de coupe (4) du premier embout (3), lorsqu'il est vu dans ladite direction (19), et également à l'avant d'une position symétrique par rapport au bord de coupe (4) du premier embout (3), lorsqu'il est vu dans la direction de travail de rotation (18) du foret.

2. Porte-outils selon la revendication 1, caractérisé en ce que le bord de coupe (6) du second embout (5) s'étend dans un plan axial (11) tangent à la pointe (9) radialement la plus à l'extérieur du bord de coupe (4) du premier embout (3) et forme un angle (12) compris entre 1 et 4° avec un plan méridien (7) s'étendant à travers ladite pointe (9) la plus à l'extérieur.

3. Porte-outils selon la revendication 1 ou 2, caractérisé en ce que ledit porte-outils (1) est pour l'essentiel un corps homogène se composant d'un acier correspondant à C15.9 SMnPb 28K.
